# EUROPEAN PATENT APPLICATION

(11) **EP 2 369 536 A1**
(43) Date of publication of application: **28.09.2011**
(21) Application number: 11157924.9
(22) Date of filing: 11.03.2011
(51) Int. Cl.: G06Q 10/00

(54) **Contact list creation method**

(30) Priority: 12.03.2010 TR 201001909
(71) Applicant: Arti Teknoloji Bora Tayfun Sahinoglu, Ismail Burc Sahinoglu Kollektif Sirketi, 34398 Istanbul (TR)
(72) Inventor: Sahinoglu, Ismail, Burc, 34398, Istanbul (TR)
(74) Representative: Dericioglu, Ekin

(57) **Abstract**

The present invention relates to a contact list creation method (100) which arranges the records in the address books provided in electronic sources according to the previous calls made by the user. The inventive contact list creation method (100) collects information in line with the calls made by the user, obtains up-to-date statistical information by analyzing these information with the previous calls, determines a ranking point by comparing the statistical information with the records in the address book, and creates a contact list by arranging the records in accordance with these ranking points.

## Description

### Field of the Invention

The present invention relates to a contact list creation method which arranges the records in the address books provided in electronic sources according to the previous communications started or received by the user via methods such as calling, messaging, etc.

### Background of the Invention

Information such as telephone numbers, addresses, e-mail addresses belonging to different people are recorded in the address books in electronic devices. Thus, all information pertaining to the person is grouped under a single title. Shortcuts or contact cards are created to reach these records. The user uses several different methods to reach the person that s/he desires to call in the address books. The user may reach the contact card of the person s/he wishes to reach by searching information such as name, surname pertaining to the concerned person, may create speed dial contacts by manually assigning the numbers of people to several shortcuts or may create voice dial records in devices supporting voice dial feature and utilize this feature. There is no application that creates contact list by taking into account the communication events performed by the user.

The United States patent document no. US2007276859 discloses a system which collects user preferences. The said system collects the information that it obtains from the user and processes this information to obtain a description of the user. This way, when the user will use the calling or a similar application (media application, e-mail or surfing the web, etc.), the system presents an application selection list to the user according to the user description attained by using the analyses it has performed on the previous events and according to the degree of the use of the applications by the user.

The European patent document no. EP2105871 discloses a method of managing context. This system keeps a track of the communication events (telephone calls, e-mails, messaging, etc.) of the user.

### Summary of the Invention

The objective of the present invention is to provide a contact list creation method which analyzes the communications started or received by the user such as calls and messaging; in terms of aspects such as time, location, call frequency, etc.

Another objective of the invention is to provide a contact list creation method which creates new contact lists by arranging the records within the address book according to the probability of the user establishing a communication, in line with the analyzed information.

### Detailed Description of the Invention

The contact list creation method developed to fulfill the objective of the present invention is illustrated in the accompanying figure wherein,

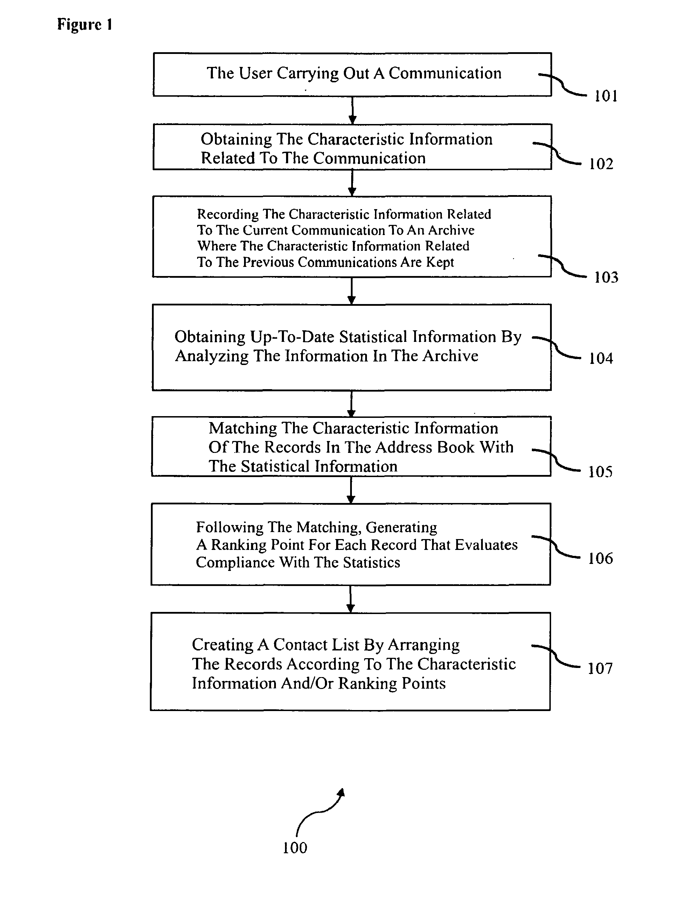

Figure 1 is the flow chart of the inventive method.

The inventive contact list creation method (100) comprises the steps of
- the user carrying out a communication that is received or started by herself/himself (101),
- obtaining the characteristic information related to the communication acquired from the call such as location, area code, date, time; and/or recorded in advance by the user such as address, office, country (102),
- recording the characteristic information related to the current communication to an archive where the characteristic information related to the previous communications are kept (103),
- obtaining up-to-date statistical information such as call frequency, call time, call duration, calling or called region by analyzing the information in the archive (104),
- matching the characteristic information of the records in the address book with the statistical information (105),
- following the matching, generating a ranking point for each record that evaluates compliance with the statistics (106),
- creating a contact list by arranging the records according to the information related to the current time and location and/or to the ranking points of compliance with the statistics (107).

The contact list creation method (100) starts to operate in case of a communication started or received by the user. During this communication, characteristic information related to the call; which are obtained from the call such as location, time, area code, date; or recorded in advance by the user such as address, office, country; are collected. These characteristic information are matched with the characteristic information of the previous calls, whereby information such as call frequency, called location are obtained statistically. For example, an individual often calls business contacts during 08:30 - 18:00 which are working hours, and out of working hours, s/he usually calls her/his family and friends. Ranking points of the business contacts in the address book of the individual mentioned in this example is higher than the other people during working hours. The contact list creation method (100) arranges the records in the address book after these ranking points are obtained. Following the arrangement, a contact list is created and by using this contact list, the user is allowed to reach the people that s/he is more likely to call more easily. Additionally, by means of this method, people that the user communicates most frequently with are also automatically included in this list, whereby the records having high probability of being called by the user are placed in the upper part of the list. Thus, in the contact list created for the individual in the above example, within working hours business contacts and out of working hours family and friends are placed at the top of the list.

The contact list creation method (100) enables us to more conveniently reach the people that we tend to call frequently when working on a specific project, people living in a city or country that we have traveled to, and people that we call within working hours and during leisure time. The user does not have to update the speed dial list or memorize various shortcuts in case of these and similar situations.

It is possible to develop a wide variety of embodiments of the inventive contact list creation method (100). The invention cannot be limited to the examples described herein and it is essentially according to the claims.

## Claims

1. A contact list creation method (100) **characterized by** the steps of
- the user carrying out a communication that is received or started by herself/himself (101),
- obtaining the characteristic information related to the communication (102),
- recording the characteristic information related to the current communication to an archive where the characteristic information related to the previous communication are kept (103),
- obtaining up-to-date statistical information such as call frequency, call time, call duration, calling or called region by analyzing the information in the archive (104),
- matching the characteristic information of the records in the address book with the statistical information (105),
- following the matching, generating a ranking point for each record that evaluates compliance with the statistics (106),
- creating a contact list by arranging the records according to the information related to the current time and location and/or to the ranking points of compliance with the statistics (107).

2. A contact list creation method (100) according to Claim 1, **characterized by** the characteristic information which are location, area code, date, time and duration obtained from the call that is made.

3. A contact list creation method (100) according to Claim 1 or 2, **characterized by** the characteristic information which are address, office, country that are recorded by the user before the call.

4. A contact list creation method (100) according to Claim 1, **characterized by** the statistical information which are call frequency, call time, call duration, calling or called region.
